# EUROPEAN PATENT SPECIFICATION

(11) **EP 2 069 800 B1**
(45) Date of publication and mention of the grant of the patent: **28.03.2012**
(21) Application number: 07842591.5
(22) Date of filing: 17.09.2007
(51) Int. Cl.: G01N 35/00, G01N 35/02

(54) **CLINICAL ANALYSIS APPARATUS**
KLINISCHES ANALYSEGERÄT
DISPOSITIF D'ANALYSE CLINIQUE

(30) Priority: 22.09.2006 US 846348 P
(43) Date of publication of application: 17.06.2009
(73) Proprietor: Fujifilm Corporation, Tokyo 106-8620 (JP); Wako Pure Chemical Industries, Ltd., Amagasaki-shi, Hyogo-ken 661-0963 (JP); Caliper Life Sciences, Inc., Mountain View, CA 94043-2234 (US)
(72) Inventor: ENDO, Youichi, Ashigarakami-gun, Kanagawa-ken 258-8538 (JP); SETO, Yoshihiro, Ashigarakami-gun, Kanagawa-ken 258-8538 (JP); SATOMURA, Shinji, Amagasaki-shi, Hyogo-ken 661-0963 (JP); HAYASHI, Masayoshi, Amagasaki-shi, Hyogo-ken 661-0963 (JP); WATANABE, Mitsuo, Amagasaki-shi, Hyogo-ken 661-0963 (JP); KENNEDY, Colin, Greenbrae, California 94904-2442 (US); GREENSTEIN, Michael, Los Altos, California 94024 (US); CATHEY, Cheryl, Menlo Park, California 94025 (US)
(74) Representative: Höhfeld, Jochen
(86) International application number: PCT/US2007/078620
(87) International publication number: WO 2008/036588

(56) References cited:
- EP-A- 0 863 400
- WO-A-2005/016536
- US-A1- 2001 005 489
- US-B1- 6 296 809

## Description

### BACKGROUND OF THE INVENTION

### Field of the Invention

The present invention relates to a clinical analysis apparatus according to the preamble of claim 1. More particularly, the present invention relates to a clinical analysis apparatus to be employed as a µTAS immuno assay system (Micro Total Analysis System, ELISA=Enzyme Linked Immuno-Sorbent Assay system and the like), wherein microchips having reagents and samples introduced into micro flow channels thereof are employed to cause the samples to electrophorese, to analyze isolated measurement target substances within the samples.

### Description of the Related Art

There is a known microchip electrophoresis apparatus comprising a microchip, in which micro flow channels having extremely small widths and depths are formed, as disclosed in Japanese Unexamined Patent Publication No. 10 (1998)-148628. In this electrophoresis apparatus, a sample is injected into the micro flow channels simultaneously with a fluid liquid (buffer liquid), and a high voltage is applied to cause electrophoresis to occur, thereby isolating a measurement target substance. The isolated substance, such as a protein or a nucleic acid, is detected at a detection point within the micro flow channels by a detecting section. The analysis method disclosed in this document analyzes a standard sample and an actual sample. Therefore, at least two analyses are performed. For this reason, in the case that only one set of micro flow channels is provided, it is necessary to cleanse the micro flow channels following a first measurement operation and prior to a second measurement operation.

There is another known microchip electrophoresis apparatus, as disclosed in Japanese Unexamined Patent Publication No. 10(1998)-246721. This microchip electrophoresis apparatus automatically performs the processes of filling a fluid liquid, injecting a sample, injecting the sample into an isolating flow channel, electrophoresis, isolation, and detection. In this microchip electrophoresis apparatus, if the same microchip is utilized to perform repeated analysis, samples that remain in the flow channels thereof are washed away, another sample is injected, and the above steps are executed.

The microchip which is utilized in the microchip electrophoresis apparatus of Japanese Unexamined Patent Publication No. 10(1998)-148628 comprises a pair of transparent plate members. A groove is formed in one of the plate members, and a hole, that is, a well, is formed in the other plate member at a position that corresponds to the groove. The two transparent plate members are joined together to form the microchip, with the groove at the interior thereof. This type of microchip is generally expensive. Accordingly, it is advantageous from the viewpoint of cost to reuse microchips by cleansing the flow channels thereof to prevent subsequent measurements from being influenced by liquids used in previous measurements, instead of discarding the microchips after each use. However, no specific cleansing means is disclosed in Japanese Unexamined Patent Publication No. 10(1998)-148628. In the case that the microchips are to be cleansed manually, there are problems that the cleansing operation is troublesome, and that the number of operational steps increases.

In the electrophoresis apparatus disclosed in Japanese Unexamined Patent Publication No. 10-246721, there is a possibility that samples used in previous measurements are not sufficiently removed and remain in the flow channels, even if they are washed away with buffer liquid. The residual samples may influence the analysis results of subsequent samples, thereby causing a possibility that obtainment of accurate analysis results will be precluded.

US 2001/000548 A1 discloses a clinical analysis apparatus according to the preamble of claim 1. According to a specific embodiment shown in this prior art document (figure 15), a rotating mechanism having a gripper arm is provided. The gripper arm has a tool for picking up microchips. Moreover, the gripper arm has a cassette pick-up tool for picking up cassettes of samples from a sample stack or picking up new tip cassettes from a stack. The gripper arm is able to transfer microchips between various different locations including a microchip wash station. US 6,296,809 B1 discloses an analysis apparatus comprising a carousel to move sample analysis elements between different process stations. A plurality of slides is disposed in a circular array. Each of plural heating devices receives a slide and each heating device is controlled independently based on measuring data received from an individual sensor associated to each heating device.

### SUMARY OF THE INVENTION

The present invention has been developed in view of the aforementioned points. It is an object of the present invention to provide a clinical analysis apparatus that enables repeated use of expensive microchips and efficient obtainment of highly accurate analysis results.

The clinical analysis apparatus of the present invention comprises the features of claim 1.

Here, the "microchips" are those that have a chip substrate formed of glass or the like, in which fine capillaries are formed. The capillaries are the "micro flow channels", into which the samples are introduced. The "reagents" include buffer liquids and labeled antibodies.

A configuration may be adopted, wherein:
an introducing station, for introducing the reagents and the samples into the micro flow channels of the microchips by pressurizing or suctioning the reagents and the samples, is provided between the dispensing station and the detecting station.

A configuration may be adopted, wherein:
a microchip attaching/removing station for attaching or removing the microchips, is provided at a desired position.

A configuration may be adopted, wherein the cleansing station performs:
a chemical cleansing step;
a water cleansing step performed after the chemical cleansing step; and
a remaining liquid suction step for suctioning liquids that remain after the water cleansing step.

It is preferable for each of the steps performed by the cleansing station to be performed by an independent station.

A configuration may be adopted, wherein:
the series of processes to be performed on a single microchip is completed during a single rotation of the rotating table.

It is preferable for the microchips to comprise recording sections, in which data indicating that the series of processes to be performed thereon have been completed after a single rotation of the rotating table is recorded.

It is preferable for the microchips to comprise recording sections, in which information regarding the processes administered thereto is recorded. The recording sections may be wireless tags.

The clinical analysis apparatus of the present invention is equipped with the measuring section that includes the conveyance mechanism, on which the microchips are provided at the predetermined pitch. The measuring section comprises the dispensing station at which the reagents and samples are dispensed into the microchips, a detecting station for detecting the measurement target substances, and a cleansing station at which the microchips are cleansed following detection of the measurement target substance, provided in this order from the upstream side of processes to be performed at a pitch corresponding to the predetermined pitch. The microchips and each of the stations are relatively and continuously rotated through the stations to perform measurements repeatedly. Therefore, the following advantageous effects are exhibited.

The used microchips can be automatically cleansed after each use, thereby automatically preparing microchips which are not tainted by previous samples. Therefore, repeated use of expensive microchips and efficient obtainment of highly accurate analysis results are enabled.

A introducing station, for introducing the reagents and the samples into the micro flow channels of the microchips by pressurizing or suctioning the reagents and the samples, may be provided between the dispensing station and the detecting station. In this case, the reagents and the samples can be sufficiently introduced into the micro flow channels in short periods of time.

A microchip attaching/removing station for attaching or removing the microchips may be provided at a desired position. In this case, the microchips can be easily exchanged, as necessary. In other words, each microchip can be repeatedly used until the end of its lifetime, and then can be easily exchanged for a new microchip.

The cleansing station may perform: a chemical cleansing step; a water cleansing step performed after the chemical cleansing step; and a remaining liquid suction step for suctioning liquids that remain after the water cleansing step. In this case, the chemical cleansing step performs chemical cleansing, the water cleansing step washes away the chemicals utilized in the chemical cleansing step and performs further cleansing, and the remaining liquid suction step suctions the liquids that remain after the water cleansing step. Therefore, the micro flow channels can be cleansed to a high degree, substantially eliminating influence to subsequent measurement operations. Accordingly, highly reliable analysis results can be obtained.

Each of the steps performed by the cleansing station may be performed by an independent station. In this case, the degree of cleansing can be positively improved with each step.

The conveyance mechanism may comprise a rotating table, on which the microchips are provided. In this case, the conveyance mechanism can be easily configured.

The number of stations and the number of microchips mounted on the rotating table may be the same. In this case, operations can be performed on each microchip by each station at every incremental rotation of the rotating table. Therefore, measurements can be performed efficiently.

The clinical analysis apparatus may be configured such that the series of processes to be performed on a single microchip is completed during a single rotation of the rotating table. In this case, measurement of a microchip is completed with each incremental rotation of the rotating table. Therefore, measurements can be performed efficiently within short periods of time.

The microchips may comprise recording sections, in which data regarding processes performed thereon is recorded. In this case, each of the microchips can be individually managed, mistakes are unlikely to occur, and highly reliable data can be obtained.

### BRIEF DESCRIPTION OF THE DRAWINGS

Figure 1A and Figure 1B illustrate an example of a microchip which is utilized in a clinical analysis apparatus of the present invention, wherein Figure 1A is a perspective view of the top surface, and Figure 1B is a perspective view of the bottom surface thereof.
Figure 2 is a plan view of a micro flow channel which is formed in the microchip of Figure 1.
Figure 3 is a perspective view of the clinical analysis apparatus of the present invention.
Figure 4 is a magnified perspective view of a measuring section of the clinical analysis apparatus of the present invention, in which microchips are provided.
Figure 5 is a schematic plan view that illustrates a stocking section and the measuring section as the main parts of the clinical analysis apparatus.
Figure 6 is a magnified perspective view that illustrates the main parts of a chemical cleansing station of the clinical analysis apparatus of Figure 3.
Figure 7 is a magnified sectional view that illustrates the concept of cleansing of a well and the application of negative pressure on another well.
Figure 8A and Figure 8B are partial magnified perspective views that illustrate states in which a microchip is being exchanged by a microchip attaching/removing station of the clinical analysis apparatus of Figure 3.

### BEST MODE FOR CARRYING OUT THE INVENTION

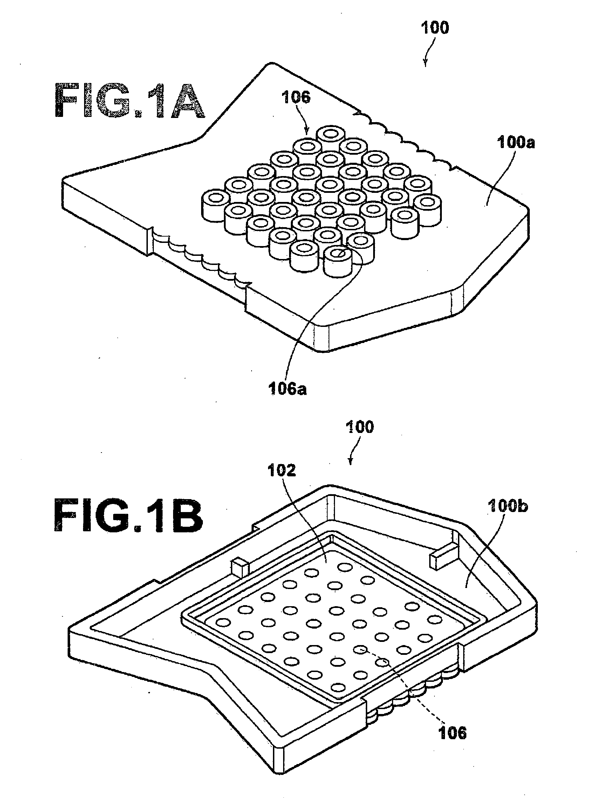

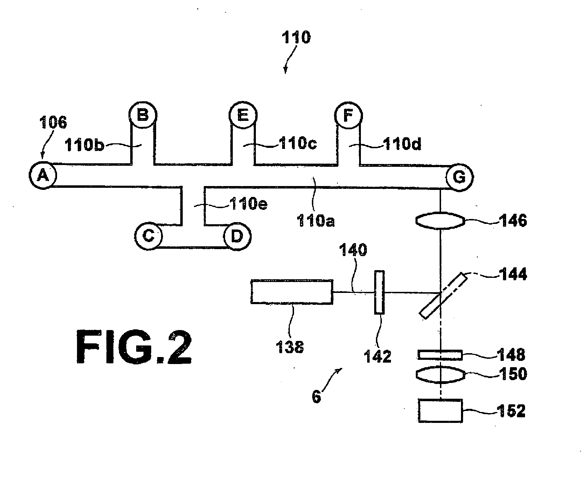

Hereinafter, an embodiment of the clinical analysis apparatus of the present invention will be described in detail with reference to the attached drawings. First, a microchip 100 which is utilized in a clinical analysis apparatus 1 (hereinafter, simply referred to as "apparatus") to detect liver cancer markers, for example, will be described with reference to Figure 1A, Figure 1B, and Figure 2.

Figure 1A and Figure 1B illustrate an example of the microchip 100 which is utilized in the apparatus 1, wherein Figure 1A is a perspective view of the top surface, and Figure 1B is a perspective view of the bottom surface thereof. The microchip 100 is molded from synthetic resin into a substantially rectangular arrowhead shape. A rectangular glass plate 102 (transparent plate member) is mounted in the central portion of a recess 100b of the underside of the microchip 100, as a chip substrate. The glass plate 102 is constituted by joining two glass plates. Micro flow channel; s 110 (capillaries, refer to Figure 2) are formed in one of the two glass plates, and the two glass plates are joined together such that the micro flow channels 110 are sandwiched therebetween. Both of the glass plates may be transparent, or only the glass plate on the side at which optical measurement (to be described later) is performed may be transparent. Meanwhile, a plurality of cylindrical protrusions, that is, wells 106, are formed on the top surface, that is, the main surface 100a of the microchip 100, as illustrated in Figure 1A. The wells 106 have inner diameters of 1.2mm, for example, and are formed at positions that correspond to those of the flow channels 110. Holes 106a of the wells 106 penetrate through one of the two glass plates, to communicate with the flow channels 110. Accordingly, if samples or the like are dripped into the wells 106, they are led to the flow channels 110. Note that the material of the chip substrate is not limited to glass, and may be synthetic resin.

Next, the flow channels 110 will be described with reference to Figure 2. Figure 2 is a plan view of a flow channel 110 which is formed in the microchip 100. The flow channel 110 is formed by a fine processing technique such as etching or lithography, and is 100µm wide and 15µm deep, for example. Two sets, for example, of independent flow channels 110 are formed in the microchip 100. The flow channel 110 comprises a main flow channel 110a, which extends in the horizontal direction in Figure 2, and offshoot flow channels 110b through 110e, which extend for short distances perpendicular from the main flow channel 110a. The wells 106 are positioned at both ends of the main flow channel 110a, as well as at the ends of each of the offshoot flow channels 110b through 110e. Note that each of the wells 106 are denoted by letters A through G. The wells A through G are collectively referred to as "wells 106". The offshoot channels 110b, 110c, and 110d are formed toward one side (the upper side in Figure 2) of the main flow channel 110a, in this order from the side of well A with intervals therebetween. The ends of the offshoot channels 100b, 100c, and 100d communicate with wells B, E, and F, respectively. The offshoot channel 110e is formed on the other side of the main flow channel 110a to be perpendicular therewith, between the offshoot channels 110b and 110c. The end of the offshoot channel 110e extends parallel to the main flow channel 110a, and the ends of the extension are in communication with wells C and D.

Note that a detecting device 6, equipped with an optical system for detecting samples, is provided in the vicinity of the flow channel 110. Samples (not shown) are measured at a predetermined position within the main flow channel 110a. Measurement target substances contained in the samples are processed such that they exhibit stimulated phosphorescence when irradiated by light from the exterior. A laser light beam 140 emitted by a laser diode 138 of the detecting device 6 is employed to stimulate phosphorescence of the measurement target substances. The laser beam 140 passes through a band pass filter 142, is reflected by a dichroic mirror 144, passes through a condensing lens 146, and is irradiated onto the samples. Thereby, the measurement target substances are stimulated and emit phosphorescence. The phosphorescent light passes through the dichroic mirror 144, a band pass filter 148, and a condensing lens 150, to be detected by a photodetector 152.

The samples may be various liquids, including bodily fluids such as blood serum, pus and lymphatic fluid, waste such as urine, beverages, and stream water. The reagents are not particularly limited, and may be selected according to the measurement target substance within the samples.

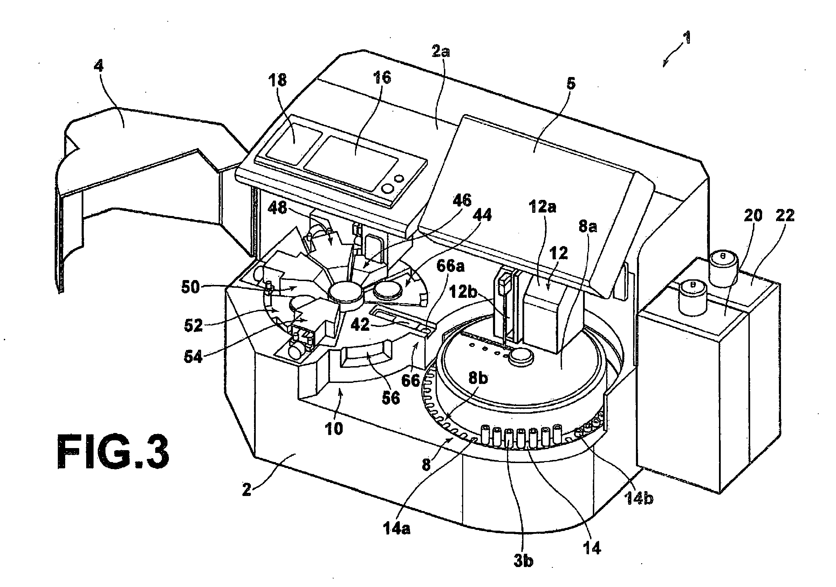

Next, the apparatus 1 of the present embodiment will be described with reference to Figure 3 through Figure 8. Figure 3 is a perspective view of the apparatus 1. The apparatus 1 comprises: a casing 2, a stocking section 8, provided in the casing 2; a measuring section 10 provided in the vicinity of the stocking section 8; and a dispensing mechanism 12 that moves reciprocally between the stocking section 8 and the measuring section 10. Covers 4 and 5, which are openable and closable with respect to the casing 2, are provided to cover the measuring section 10 and the stocking section 8, respectively. The covers 4 and 5 are configured such that they cannot be opened during detection of samples and cleansing operations. The stocking section 8 comprises a circular reagent bay 8a and a sample holding section 8b. The sample holding section 8b comprises an annular member 14 that surrounds the periphery of the reagent bay 8a. Note that the reagent bay 8a and the sample holding section 8b are rotatable. However, drive sources such as motors for rotating the reagent bay 8a and the sample holding section 8b have been omitted from Figure 3. The a plurality of cutouts 14a for holding sample containers 3b are formed in the annular member 14 at predetermined intervals. Note that the interior of the stocking section 8 is cooled by a cooling device (not shown).

A display panel 16 constituted by an LCD or the like is provided on the upper surface 2a of the casing 2. The display panel 16 displays the names of tests, and enables selection of items to be measured for each sample. A printer 18 for printing out analysis results is provided in the vicinity of the display panel 16. A parallelepiped cleansing water container 20 and a parallelepiped waste liquid container 22 are mounted on the exterior of the casing 2 in the vicinity of the stocking section 8. The cleansing water container 20 contains water for cleansing the microchips 100 and the like. The waste liquid container 22 contains all waste liquids. The dispensing mechanism 12 comprises: a moving body 12a; and a probe 12b, which is attached to the moving body 12a. In the present embodiment, a single probe 12b is utilized. Because the probe 12b suctions and conveys samples and a plurality of types of reagents, it is cleansed every time that a different liquid is to be conveyed. The cleansing operation of the probe 12b is performed at a probe cleansing section 66, which is positioned between the measuring section 10 and the stocking section 8. That is, the probe 12b is inserted into an opening 66a of the probe cleansing section 66, and is cleansed by cleansing liquid (not shown) within the cleansing section 66.

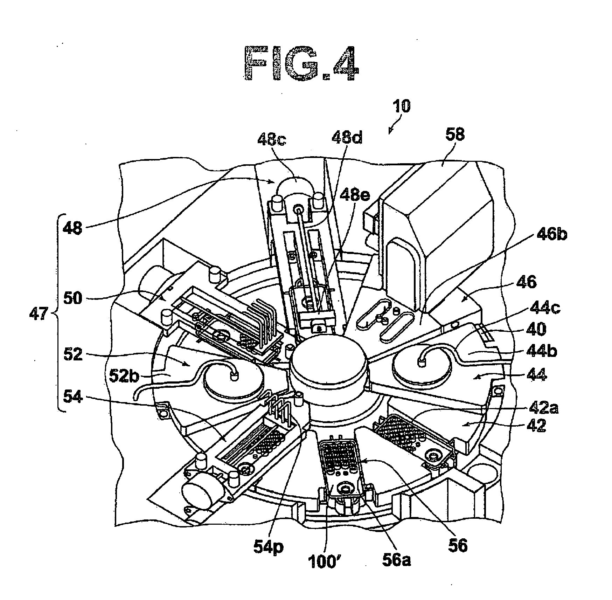

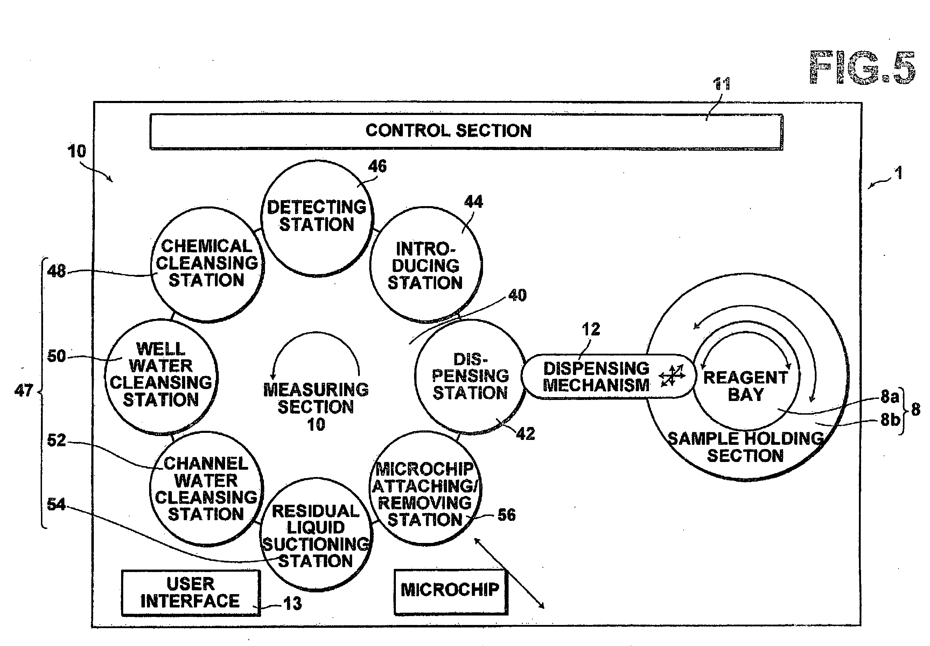

Next, the measuring section 10 will be described with combined reference to Figure 3, Figure 4 and Figure 5. Figure 4 is a magnified perspective view of the measuring section 10, in which microchips 100' are provided. Note that the microchips 100' are different from the microchips 100 in shape, but share the same principle and basic design. Each part of the microchips 100' will be denoted by a reference number for the corresponding part in the microchips 100 with an ' attached. Figure 5 is a schematic plan view that illustrates the stocking section 8 and the measuring section 10 as the main parts of the apparatus 1. The measuring 10 is equipped with: a drive source (not shown) that functions as a conveyance mechanism for conveying the microchips 100'; and a rotating table 40 which is driven to rotate counterclockwise by the drive source. The rotating direction of the rotating 40 is unidirectional in the counterclockwise direction, and the drive source is not configured to enable clockwise rotation. Eight stations 42, 44, 46, 48, 50, 52, 54, and 56 are provided on the rotating table 40 at a predetermined pitch. A microchip 100' is to be placed at each of the stations 42 through 56. The first station, at which the measurement operation is initiated, is a dispensing station 42, at which samples and the like are dispensed into the microchips 100' by the probe 12b of the dispensing mechanism 12. That is, the dispensing station 42 is where the first step in the measurement operation is performed. The remaining stations, that is, an introducing station 44; a detecting station 46; cleansing stations 47; and a microchip attaching/removing station 56, for attaching and removing the microchips 100' , are provided on the rotating table 40 in this order in the counterclockwise direction. Note that in the present embodiment, the cleansing stations 47 comprise four stations, that is, a chemical cleansing station 48, water cleansing stations 50 and 52, and a residual liquid suctioning station 54. The four cleansing stations 48, 50, 52, and 54 perform a chemical cleansing step, a first water cleansing step, a second water cleansing step, and a residual liquid suctioning step, respectively. Note that the structural element denoted by reference numeral 13 in Figure 5 (User Interface Section) is a so-called operating panel.

Next, each of the stations 42, 44, 46, 47 (48, 50, 52, and 54), and 56 will be described in detail with reference to Figure 4. Cover members 44b, 46b, and 52b are mounted on the casing 2 such that they are capable of approaching and separating from the rotating table 40, to perform opening and closing operations. Accordingly, only the rotating table 40 rotates, and the cover members 44b, 46b, and 52b do not move within a plane parallel to the rotating table 40. A microchip 100' is provided in each of the eight stations 42, 44, 46, 48, 50, 52, 53, and 56. The eight stations are provided about the circumference of the rotating table 40 such that they are equidistant from each other. The amount of time spent performing operations at each of the eight stations 42 through 56 is the same, for example, 200 seconds. That is, after 200 seconds pass, the rotating table 40 rotates to the next step. Therefore, one cycle is completed after a single rotation (200x8=1600 seconds), and measurement operations for the first microchip 100' are completed. Thereafter, the measurement operations for the remaining microchips 100' are sequentially completed after 200 second intervals.

A recess 42a is formed in the dispensing station 42, and a microchip 100' are placed within the recess 42a. The moving body 12a of the dispensing mechanism 12 moves to the dispensing station 42, and samples and the like are dripped into a predetermined well 106' by the probe 12b. This operation is repeated for all of the wells 106' into which reagents or samples are to be dripped (first step).

A recess, into which a microchip 100' is to be placed, is also formed in the introducing station 44. The cover member 44b is provided so as to be openable and closable above the recess. Tubes 44c for communicating with predetermined wells 106' of the microchip 100' are mounted on the cover member 44b. Pressurized gas is supplied into the wells C and D illustrated in Figure 2 via the tubes 44c (second step).

A similar recess is formed in the detecting station 46, and the cover member 46b is provided above the recess. Electrodes (not shown) for applying voltages used in electrophoresis are provided on the underside of the cover member 46b. The electrodes are positioned to correspond to the wells A, F, and G, through which the voltages are applied. A light measuring section 58 of the detecting station 46 has the aforementioned detecting device 6 incorporated therein. The light measuring section 58 is configured to be positioned above the cover member 46b during detection, and to retreat to a position toward the exterior of the rotating table 40 when the cover member 46b is opened, to avoid interfering therewith. The voltages are applied by the electrodes to cause samples to electrophorese at the detecting station 46 (third step). At this time, stable electrophoresis of the samples can be realized at a low temperature, for example, 10°C, depending on the sample. Next, the wells 106' to which voltages are applied to are switched (fourth step). Electrophoreses is maintained, and measurement of the measurement target substance is performed (fifth step). During this measurement, dripping of reagents and the like into each flow channel 110' can be performed with time lags therebetween, because two sets of flow channels 110' are provided. Therefore, the times that the samples reach the measurement positions within the flow channels 110' can be shifted, and sequential measurements can be performed. The two flow channels 110' are slightly shifted with respect to each other within the plane of the glass plate 102'. Accordingly, the lens of the optical system can move slightly after measurement of a first flow channel 110' to measure a second flow channel 110'.

Next, the cleansing stations 47 will be described in detail. The cleansing stations 47 comprise the four stations 48, 50, 52, and 54, each of which performs a single cleansing step. The chemical cleansing station 48 employs a chemical (cleansing agent) such as NaOH (sodium hydroxide) to cleanse the flow channels 110' of used microchips 100'. The chemical cleansing station 48 is configured to cleanse wells 106' contaminated by samples, by discharging the chemical into the wells 106' and then suctioning it out. At this time, the chemical is suctioned from the flow channels 110' at a negative pressure of for example, 300g/cm².

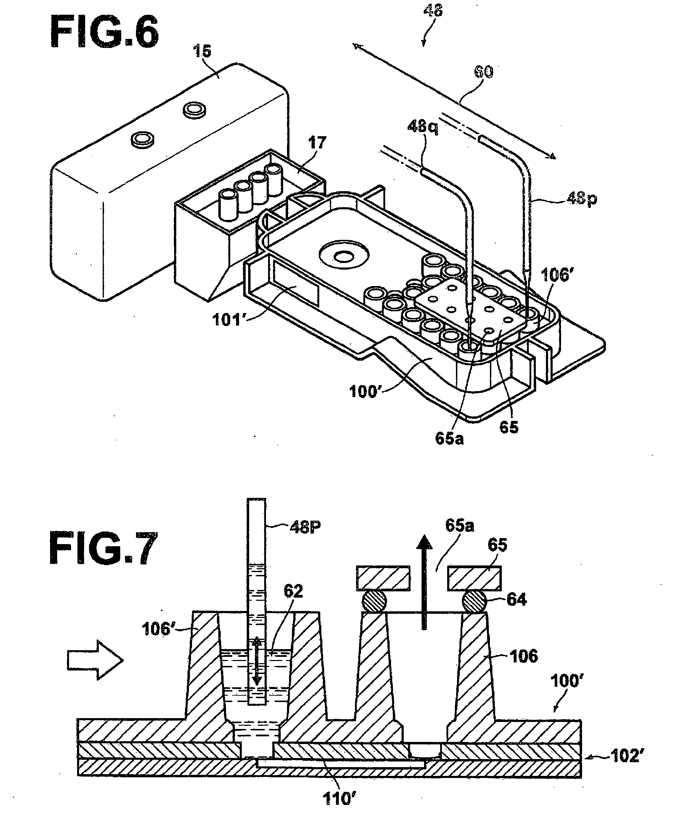

The chemical cleansing step is performed as illustrated in Figure 6, for example. Figure 6 is a magnified perspective view that illustrates the main parts of the chemical cleansing station 48. The two flow channels 110' are formed in each microchip 100' . Probes 48p and 48q are configured to discharge and suction chemicals to each of the two flow channels 110'. The probes 48p and 48q are capable of moving in the directions indicated by arrow 60. This movement is performed employing a motor 48c illustrated in Figure 4, and a threaded shaft 48d, which is driven by the motor 48c. That is, a member 48e that supports the microchip 100' is engaged with the threaded shaft 48d, and the microchip 100' is moved reciprocally in the radial direction of the rotating table 40 by rotation of the threaded shaft 48d.

Note that only the tips of the probes 48p and 48q are illustrated in Figure 6. However, the probes 48p and 48q extend as illustrated by the broken lines, or have tubes attached thereto. A chemical (cleansing agent) container 15 and a probe cleansing tank 17 are also provided in the chemical cleansing station 48. The cleansing agent is contained in the chemical container 15. The cleansing agent is supplied to the wells 106' by the probes 48p and 48q. During the chemical cleansing operation, the tips of the probes 48p and 48q are inserted into the wells 106', and therefore they are cleansed within the probe cleansing tan 17 after each insertion. Openings 65a that communicate with a syringe pump (not shown) are formed in a sealing plate 65 at positions that correspond to the wells 106'. Pressure supplied by the syringe pump is utilized to expel the chemical from the wells 106' and the micro flow channels 110'.

The chemical is discharged into the plurality of wells 106' aligned in a single row by the probe 48p, and suctioned out from the wells 106' aligned in another row at the aforementioned negative pressure of 300g/cm². The manner of cleansing will be described with combined reference to Figure 7. Figure 7 is a magnified sectional view that illustrates the concept of cleansing of a well 106' and the application of negative pressure on another well 106'. Figure 7 illustrates a state in which the probe 48p is inserted into a well 106', while discharging and suctioning a chemical 62 such that it does not overflow from the well 106'. Figure 7 also illustrates a state in which another well 106' is sealed by sealing members 64 and the sealing plate 65, while negative pressure is applied to perform suction. In this manner, the samples and chemical 62 are suctioned from the wells 106' and the flow channels 110' while the probes 48p and 48q move. Thereby, the flow channels 110' are sufficiently cleansed. Accordingly, the degree of cleansing is high. Note that the portion denoted by reference number 102' in Figure 7 is the glass plate 102'.

After the chemical cleansing step, the water cleansing station 50 performs discharge and suction of water to all of the wells 106' in the same manner as illustrated in Figure 7. Further, the water cleansing station 52 expels the chemical from the flow paths 110' with a water pressure of, for example, 10kg/cm². At this time, the well 106' through which the water and the chemical are expelled is open to the atmosphere, and the expelled waste liquid is contained in the waste liquid container 22. This operation is performed by a probe 54p (refer to Figure 4), which is connected to a negative pressure source, being inserted into the wells 106'.

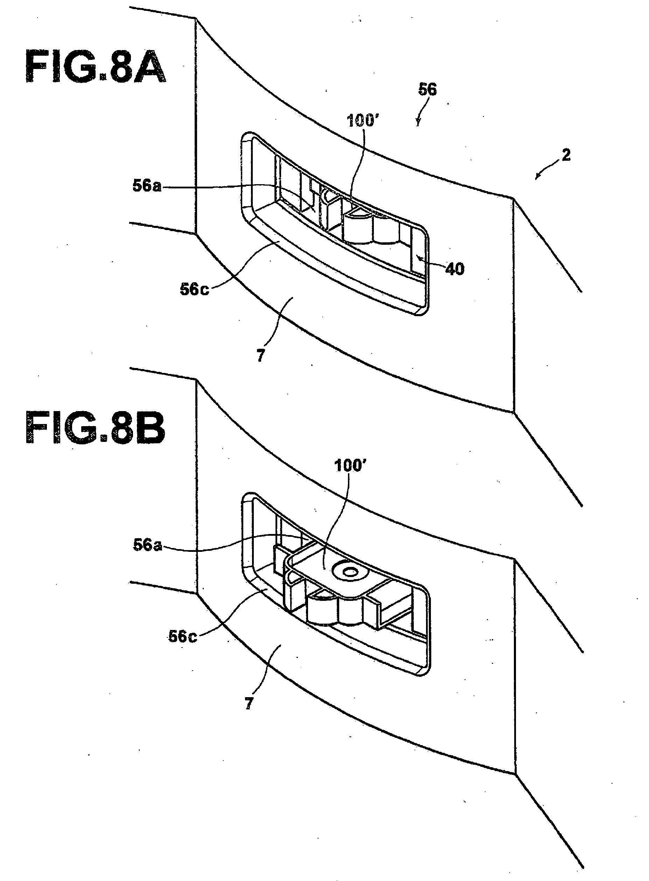

Next, the cleansed microchips 100' are conveyed to the microchip attaching/removing station 56. If a microchip 100' has been used a predetermined number of times, which is considered to be its usable lifetime, for example, 10 to 200 times, the microchip attaching/removing station 56 removes the microchip 100' and mounts a new microchip 100' on the rotating table 40. The microchip attaching/removing station 56 only functions when exchanging microchips 100', and does not operate during normal measurement. Figure 8A and Figure 8B are partial magnified perspective views that illustrate states in which a microchip 100' is being exchanged by the microchip attaching/removing station 56. An opening 56c corresponding to a recess 56a of the rotating table 40 is provided, for example, in the casing 2, at the microchip attaching/removing station 56. The opening 56c may be open at all times, or an appropriate lid (not shown) may be provided to open and close the opening 56c. A microchip 100' at the end of its useful lifetime can be accessed through the opening 56c and removed, and a new microchip 100' may be loaded through the opening 56c. In order to judge whether a microchip 100' has reached the end of its useful lifetime, a wireless tag 101' (recording portion) may be provided on the microchip 100'. The number of times that the microchip 100' has been used may be automatically be recorded in the wireless tag 101', and when a predetermined number is reached, a message prompting exchange of the microchip 100' may b displayed on the display panel 16. Alternatively, an operator may be notified of the need to exchange microchips 100' by an audio signal. The counting of the number of uses and recording of the number of uses into the wireless tag 101' may be managed by a control section 11 (refer to Figure 5), provided on the rear side of the apparatus 1, for example. Note that the wireless tag 101' may be provided at a desired position on the microchip 100' by fitting, embedding, or any other means.

As described above, the apparatus 1 of the present embodiment is capable of efficiently performing accurate measurements, and is therefore suited for clinical use. In addition, a plurality of flow channels 110 and 110' are formed in the microchips 100 and 100'. Therefore, a single microchip may be utilized to measure the same items to be analyzed for a plurality of patients, or to measure a plurality of items to be analyzed for a single patient. The number of flow channels 110 and 110' may be increased further, to enable measurement of a plurality of items to be analyzed for a plurality of patients.

Note that in the present embodiment, the microchips 100 and 100' are rotated through the stations. Alternatively, the stations may be rotated to perform their respective processes on the microchips. In addition, the cleansing stations 47 comprise the plurality of cleansing stations that perform different cleansing steps. Alternatively, the plurality of cleansing steps may be performed by a single cleansing station. Further, in the above embodiment, the reagents and samples are introduced into the wells by being pressurized. Alternatively, the reagents and samples may be introduced into the wells by suctioning from an opposing well. The pressurization and suction may be performed independently, or simultaneously.

In the present embodiment, the reagents and samples are caused to electrophorese within the micro flow channels 110 and 110'. However, the present invention is not limited to this embodiment. Movement and isolation within the micro flow paths 110 and 110' may be performed by pressurization and/or suction.

## Claims

1. A clinical analysis apparatus (1) that employs microchips (100, 100') in which micro flow channels (110, 110') are formed, introduces reagents and samples into the micro flow channels (110, 110'), and analyzes measurement target substances contained in the sample, comprising:
a casing (2);
a stocking section (8) provided in the casing (2) for stocking the reagents and the samples;
a dispensing mechanism (12), for dispensing the reagents and samples stocked in the stocking section (8) to the microchips (100, 100'); and
a measuring section (10), for measuring the measurement target substances within the samples, which have been dispensed into the micro flow channels (110, 110'), **characterized in that**
the measuring section (10) includes a conveyance mechanism (40) adapted to convey the microchips (100, 100'), wherein the conveyance mechanism comprises a rotating table (40), on which the microchips (100, 100') are provided at a predetermined pitch and which is rotated in one direction of a clockwise and a counter clockwise direction,
the measuring section (10) further comprises a dispensing station (42) at which the reagents and samples are dispensed into the microchips (100, 100') via said dispensing mechanism (12) a detecting station (46) for detecting the measurement target substances, and a cleansing station (47) at which the microchips (100, 100') are cleansed following detection of the measurement target substance, provided in this order in said one direction, which is the direction of processes to be performed, and provided at the same predetermined pitch as said microchips;
the conveyance mechanism is adapted to rotate the microchips (100, 100') intermittently and sequentially through the stations to repeatedly perform measurement, and the number of microchips (100, 100') which are mounted on the rotating table (40) is the same as the number of stations.

2. A clinical analysis apparatus (1) as defined in claim 1, further comprising:
an introducing station (44), for introducing the reagents and the samples into the micro flow channels (110, 110') of the microchips (100, 100') by pressurizing or
suctioning the reagents and the samples, provided between the dispensing station (42) and the detecting station (46).

3. A clinical analysis apparatus (1) as defined in claim 1, further comprising:
a microchip attaching/removing station (56) for attaching or removing the microchips (100, 100'), provided at a desired position.

4. A clinical analysis apparatus (1) as defined in claim 1, wherein the cleansing station (47) is adapted to perform:
a chemical cleansing step;
a water cleansing step performed after the chemical cleansing step; and
a remaining liquid suction step for suctioning liquids that remain after the water cleansing step.

5. A clinical analysis (1) apparatus as defined in claim 4, wherein:
each of the steps performed by the cleansing station (47) are performed by an independent station.

6. A clinical analysis apparatus (1) as defined in claim 1, wherein:
the pitch and the number of stations of the measuring section is related to the series of processes to be performed on a single microchip (100, 100') such that the series is completed during a single rotation of the rotating table (40).

7. A clinical analysis apparatus (1) as defined in claim 1, wherein:
the microchips (100, 100') comprise recording sections (101'), in which information regarding the processes administered thereto is recorded.

## Patentansprüche

1. Klinische Analysevorrichtung (1), die von Mikrochips (100, 100') Gebrauch macht, in denen Mikroströmungskanäle (110, 110') ausgebildet sind, die Reagenzien und Proben in die Mikroströmungskanäle (110, 110') einbringt und in der Probe enthaltene Messziel-Substanzen analysiert, umfassend:
ein Gehäuse (2);
einen Vorratsabschnitt (8), der in dem Gehäuse (2) vorgesehen ist, um die Reagenzien und die Proben zu bevorraten;
einen Ausgabemechanismus (12) zum Ausgeben der Reagenzien und Proben, die in dem Vorratsabschnitt (8) bevorratet sind, an die Mikrochips (100, 110'); und
einen Messabschnitt (10) zum Messen der Messziel-Substanzen in den Proben, die in die Mikroströmungskanäle (110, 110') ausgegeben wurden,
**dadurch gekennzeichnet, dass**
der Messabschnitt (10) einen Fördermechanismus (4) enthält, ausgebildet zum Befördern der Mikrochips (100, 100'), wobei der Fördermechanismus einen Drehtisch (40) aufweist, auf welchem die Mikrochips (100, 100') mit einem vorbestimmten Mittenabstand angeordnet sind und der in eine Richtung von einer Richtung im Uhrzeigersinn und einer Richtung im Gegenuhrzeigersinn gedreht wird,
der Messabschnitt (10) außerdem eine Ausgabestation (42) aufweist, an der die Reagenzien und Proben in die Mikrochips (100, 100') über den Ausgabemechanismus (12) ausgegeben werden, eine Nachweisstation (46) zum Nachweisen der Messziel-Substanzen, und eine Reinigungsstation (47), an der die Mikrochips (100, 100') im Anschluss an den Nachweis der Messziel-Substanzen, aufweist, welche in dieser Reihenfolge in der einen Richtung vorgesehen sind, wobei es sich um die Richtung handelt, in der Prozesse ausgeführt werden, und in dem gleichen vorbestimmten Mittenabstand wie die Mikrochips vorgesehen sind;
der Fördermechanismus dazu ausgebildet ist, die Mikrochips (100, 100') intermittierend und sequentiell durch die Stationen zu drehen, um wiederholt eine Messung auszuführen, und die Anzahl der Mikrochips (100, 100'), die auf dem Drehtisch (40) gelagert sind, die gleiche ist, wie die Anzahl von Stationen.

2. Klinische Analysevorrichtung (1) nach Anspruch 1, weiterhin umfassend:
eine Einführstation (44) zum Einführen der Reagenzien und der Proben in die Mikroströmungskanäle (110, 110') der Mikrochips (100, 100') durch Pressen oder Ansaugen der Reagenzien und Proben, vorgesehen zwischen der Ausgabestation (52) und der Nachweisstation (46).

3. Klinische Analysevorrichtung (1) nach Anspruch 1, weiterhin umfassend:
eine Mikrochip-Anbring-/Entnahme-Station (46) zum Anbringen oder Entnehmen der Mikrochips (100, 100'), vorgesehen an einer gewünschten Stelle.

4. Klinische Analysevorrichtung (1) nach Anspruch 1, bei der die Reinigungsstation (47) dazu ausgebildet ist, folgende Schritte auszuführen:
einen chemischen Reinigungsschritt;
einen Wasserreinigungsschritt, ausgeführt nach dem chemischen Reinigungsschritt; und
einen Restflüssigkeits-Ansaugschritt zum Ansaugen von Flüssigkeiten, die nach dem Wasserreinigungsschritt verblieben sind.

5. Klinische Analysevorrichtung (1) nach Anspruch 4, bei der jeder der von der Reinigungsstation (47) ausgeführten Schritte durch eine unabhängige Station ausgeführt wird.

6. Klinische Analysevorrichtung (1) nach Anspruch 1, bei der der Mittenabstand und die Anzahl von Stationen des Messabschnitts in Beziehung stehen zu einer Reihe von Prozessen, die in Bezug auf einen einzelnen Mikrochip (100, 100') durchzuführen sind, so dass die Ablauffolge während einer einzigen Drehung des Drehtischs (40) abgeschlossen wird.

7. Klinische Analysevorrichtung (1) nach Anspruch 1, bei der die Mikrochips (100, 100') Aufzeichnungsabschnitte (101') aufweisen, in denen Informationen über die an ihnen ausgeführten Prozesse aufgezeichnet ist.

## Revendications

1. Appareil d'analyse clinique (1) qui utilise des micropuces (100, 100'), dans lesquelles sont formés des micro-canaux d'écoulement (110, 110'), qui introduit des réactifs et des échantillons dans les micro-canaux d'écoulement (110, 110'), et qui analyse des substances cibles de mesure contenues dans l'échantillon, comprenant :
un boîtier (2) ;
une partie de stockage (8) fournie dans le boîtier (2), destinée à stocker les réactifs et les échantillons ;
un mécanisme distributeur (12), destiné à distribuer les réactifs et échantillons stockés dans la partie de stockage (8) vers les micropuces (100, 100'), et
une partie de mesure (10), destinée à mesurer les substances cibles de mesure à l'intérieur des échantillons, lesquelles ont été distribuées dans les micro-canaux d'écoulement (110, 110')
**caractérisé en ce que**
la partie de mesure (10) inclut un mécanisme d'acheminement (40) apte à acheminer les micropuces (100, 100'), le mécanisme d'acheminement comprenant un plateau rotatif (40), sur lequel sont prévues les micropuces (100, 100') suivant un pas prédéterminé et lequel tourne dans une direction, parmi une direction horaire et antihoraire ;
la partie de mesure (10) comprend en outre une station distributrice (42) au niveau de laquelle les réactifs et échantillons sont distribués dans les micropuces (100, 100') par le biais dudit mécanisme distributeur (12), une station de détection (46) destinée à détecter les substances cibles de mesure, et une station de nettoyage (47) au niveau de laquelle les micropuces (100, 100') sont nettoyées suite à la détection des substances cibles de mesure, prévues dans cet ordre dans ladite une direction, laquelle est la direction des processus à réaliser, et prévues suivant un pas prédéterminé égal à celui desdites micropuces ;
le mécanisme d'acheminement est apte à faire tourner les micropuces (100, 100') par intermittence et séquentiellement à travers les stations, afin de réaliser de manière répétée la mesure, et le nombre de micropuces (100, 100') montées sur le plateau rotatif (40) est égal au nombre de stations.

2. Appareil d'analyse clinique (1) selon la revendication 1, comprenant en outre :
une station d'introduction (44), destinée à introduire les réactifs et les échantillons dans les micro-canaux d'écoulement (110, 110') des micropuces (100, 100') en pressurisant ou aspirant les réactifs et les échantillons, fournie entre la station distributrice (42) et la station de détection (46).

3. Appareil d'analyse clinique (1) selon la revendication 1, comprenant en outre :
une station de fixation/retrait de micropuces (56) destinée à fixer ou retirer les micropuces (100, 100'), fournie en une position souhaitée.

4. Appareil d'analyse clinique (1) selon la revendication 1, dans lequel la station de nettoyage (47) est apte à réaliser :
une étape de nettoyage chimique ;
une étape de nettoyage à l'eau réalisée après l'étape de nettoyage chimique, et
une étape d'aspiration de liquide restant destinée à aspirer les liquides qui restent après l'étape de nettoyage à l'eau.

5. Appareil d'analyse clinique (1) selon la revendication 4, dans lequel :
chacune des étapes réalisées par la station de nettoyage (47) est réalisée par une station indépendante.

6. Appareil d'analyse clinique (1) selon la revendication 1, dans lequel
le pas et le nombre de stations de la partie de mesure sont liés aux séries de processus à réaliser sur une seule micropuce (100, 100'), de telle sorte que la série soit terminée lors d'une rotation unique du plateau rotatif (40).

7. Appareil d'analyse clinique (1) selon la revendication 1, dans lequel :
les micropuces (100, 100') comprennent des parties d'enregistrement (101'), dans lesquelles sont enregistrées des informations relatives aux processus subis par celles-ci.
